# EUROPÄISCHE PATENTSCHRIFT

(11) **EP 4 078 107 B1**
(45) Veröffentlichungstag und Bekanntmachung des Hinweises auf die Patenterteilung: **10.07.2024**
(21) Anmeldenummer: 19832668.8
(22) Anmeldetag: 19.12.2019
(51) Int. Cl.: G01F 23/00

(54) **MESSVORRICHTUNG ZUR ERFASSUNG EINES FÜLL- ODER GRENZSTANDS EINES FÜLLGUTS IN EINEM BEHÄLTER SOWIE VERFAHREN ZUM BEFÜLLEN ODER ENTLEEREN EINES BEHÄLTERS MIT BZW. VON EINEM FÜLLGUT**
MEASURING DEVICE FOR DETERMINING A FILLING LEVEL OR LIMIT LEVEL OF A PRODUCT IN A CONTAINER AND METHOD FOR FILLING OR EMPTYING A CONTAINER
DISPOSITIF DE MESURE POUR DÉTERMINER UN NIVEAU DE REMPLISSAGE OU UN NIVEAU LIMITE D'UN PRODUIT DANS UN RÉCIPIENT ET PROCÉDÉ POUR REMPLIR OU VIDER UN RÉCIPIENT

(43) Veröffentlichungstag der Anmeldung: 26.10.2022
(73) Patentinhaber: VEGA Grieshaber KG, 77709 Wolfach (DE)
(72) Erfinder: HENGSTLER, Clemens, 77716 Haslach (DE)
(74) Vertreter: Patentanwälte Bauer Vorberg Kayser
(86) Internationale Anmeldenummer: PCT/EP2019/086397
(87) Internationale Veröffentlichungsnummer: WO 2021/121605

(56) Entgegenhaltungen:
- EP-A1- 2 256 566
- DE-U1- 202019 001 575
- US-A1- 2010 106 446
- US-A1- 2016 116 324
- US-B1- 6 192 752

## Beschreibung

Die vorliegende Erfindung betrifft eine Messvorrichtung zur Erfassung eines Füll-oder Grenzstands eines Füllguts in einem Behälter gemäß dem Oberbegriff des Patentanspruchs 1 sowie ein Verfahren zum Befüllen oder Entleeren eines Behälters mit bzw. von einem Füllgut gemäß dem Oberbegriff des Patentanspruchs 11.

Messvorrichtungen zur Erfassung eines Füll- oder Grenzstands von Füllgütern in Behältern sind aus dem Stand der Technik wohl bekannt. Die Messvorrichtungen können dabei auf unterschiedlichen physikalischen oder mechanischen Messverfahren beruhen, mit welchen ein Füllstand, beispielsweise eine Füllhöhe, eines Füllguts in einem Behälter wie einem Tank, einem Becken oder Silo erfasst werden kann. Bei dem Behälter kann es sich dabei um geschlossene oder teilgeöffnete Systeme handeln. Die mit dem zugrunde liegenden Messverfahren ermittelte Füllhöhe des Füllguts wird in der Regel in ein elektronisches Signal umgewandelt. Sofern ein bestimmter Füllstand, beispielsweise ein maximal zulässiger oder gewünschter Füllstand, extern vorgegeben wird, so wird dieser in der Regel als Grenzstand bezeichnet. Im Gegensatz zu einer in der Regel kontinuierlich ausgeführten Füllstandmessung - hierbei wird der Füllstand kontinuierlich erfasst - wird bei einer Grenzstandmessung nicht zu jedem Zeitpunkt der Füllstand bzw. die Füllhöhe ermittelt, sondern der Füllstand bzw. die Füllhöhe wird bei Erreichen eines vordefinierten Füllstands, insbesondere einer Füllhöhe, erfasst.

Bei den zur Erfassung eines Füll- oder Grenzstands zum Einsatz kommenden Messverfahren handelt es sich häufig um laufzeitbasierte Verfahren wie Radar oder Ultraschall, hydrostatische Verfahren (z.B. Druckmessungen), kapazitive oder radiometrische Verfahren. Auch optische Verfahren können zur Füll- oder Grenzstandbestimmung eingesetzt werden.

Messvorrichtungen zur Erfassung eines Füll- oder Grenzstands können bei Füll-oder Grenzstandmessungen von Füllgütern unterschiedlicher Art eingesetzt werden, insbesondere bei festen oder flüssigen Füllgütern. Als Beispiele für feste Füllgüter seien Pulver, Granulate, oder anderweitige Schüttgüter genannt. Auch gel-artige, pastöse bzw. zähflüssige Substanzen können als feste Füllgüter angesehen werden. Flüssige Füllgüter können insbesondere wässrige oder ölige Substanzen sein.

Messvorrichtungen zur Füllstand- oder Grenzstandmessung ist gemein, dass diese zumindest einen in Richtung des zu messenden Füllguts ausgerichteten Sensor aufweisen. Insbesondere werden die Sensoren direkt an oder in den Behältern montiert, in welchen sich ein Füllgut befindet bzw. in welche ein Füllgut eingefüllt wird. Zur Befestigung kommen insbesondere mechanische Befestigungsmittel zum Einsatz, beispielsweise auf Schraubverbindungen, Klemmverbindungen, Kraft- oder Formschlussverbindungen oder magnetischen Verbindungen basierende Befestigungsmittel.

DE 20 2019 001575 U1 beschreibt eine Messvorrichtung zur Erfassung eines Füll- oder Grenzstands eines Füllguts in einem Behälter gemäß dem Stand der Technik, wobei eine Aktivierungseinheit für einen Füll- oder Grenzstandsensor per Funk für eine vorgegebene Zeit aktiviert werden kann.

Derartige an einem Behälter angeordnete bzw. befestigte Messvorrichtungen zur Füllstand- oder Grenzstandmessung bedürfen zum funktionsgemäßen Betrieb einer Energieversorgung. Verwirklicht wird diese bei aus dem Stand der Technik bekannten Messvorrichtungen in der Regel über stationäre Energieversorgungseinrichtungen, die mit einem entsprechenden (elektrischen) Energieversorgungsanschluss der Messvorrichtung verbunden werden. Die dabei zwischen Energieversorgungseinrichtung und Messvorrichtung vorgesehene elektrische Verbindung kann insbesondere in Form einer elektrischen Kabelverbindung ausgebildet sein.

Nachteilig bei einer solchen stationären Energieversorgung ist dabei die starke Ortsgebundenheit, welche dazu führt, dass die Befüllung oder Entleerung eines Behälters in der Nähe zu einer entsprechenden Energieversorgungseinrichtung der Messvorrichtung stattfinden muss. Insbesondere für den Einsatz bei mobilen Behältern, beispielsweise Transportbehältern, sind entsprechende - lediglich über eine stationäre Energieversorgungseinrichtung elektrisch betreibbare - Messvorrichtungen ungeeignet. Ferner erfordert eine solche externe Energieversorgung das Vorsehen geeigneter Anschlüsse an der Messvorrichtung und die Bereitstellung der externen Energieversorgungseinrichtung (z.B. einer Energiequelle). Dadurch wird der bauliche Aufwand bei der Fertigung der Messvorrichtung erhöht und der Einsatzbereich der Messvorrichtung eingeschränkt.

Im Gegensatz dazu sind zwar auch batteriebetriebene Messvorrichtungen zur Füllstand- oder Grenzstandmessung bekannt, die einen ortsunabhängigen Einsatz der Messvorrichtungen im Sinne eines Feldgeräts ermöglichen (z.B. an einem mobilen Behälter), den bekannten Systemen mangelt es jedoch in der Regel an einer ausreichenden Nutzungseffizienz in Bezug auf die von der Batterie bereitgestellte Energie. In anderen Worten bedeutet dies, dass es den bekannten Systemen insbesondere an einer ausreichenden Differenzierungsfähigkeit bezüglich unterschiedlichen Energiebedarfszuständen fehlt, insbesondere jenen Zuständen, in welchen eine Energieversorgung der Messvorrichtung mit Energie aktiv bereitgestellt werden muss (z.B. bei der Befüllung oder Entleerung eines Behälters mit bzw. von Füllgut), und jenen Zuständen, in welchen keine Volllast-Energieversorgung der Messvorrichtung erforderlich ist.

Um einen sicheren Transport mobiler Behälter zu gewährleisten, ist es erstrebenswert diese nur bis zu einem gewissen Füllstand mit Füllgut zu befüllen. Aus dem Stand der Technik ist es - wie erwähnt - bekannt, Messvorrichtungen zur Füll- oder Grenzstandbestimmung unmittelbar an den Behältern anzuordnen. Jedoch ist es dabei in der Regel erforderlich die an den Behältern angeordneten Messvorrichtungen - vor der Befüllung - manuell mit einer Steuerung der Füll-oder Entleerungseinrichtung zu verbinden. Eine automatisierte Kopplung einer an einem solchen Behälter angeordneten Messvorrichtung an die Füll- oder Entleerungseinrichtung ist im Stand der Technik nicht bzw. nur unzureichend beschrieben. Gleiches gilt für Entleerungsvorgänge von mit Füllgut befüllten Behältern.

Entsprechend liegt der vorliegenden Erfindung die Aufgabe zugrunde, eine Messvorrichtung zur Erfassung eines Füll- oder Grenzstands eines Füllguts in einem Behälter bereitzustellen, mit welcher ein zumindest teilweise automatisierter, energieautarker, zuverlässiger und fehlerreduzierter Betrieb ermöglicht wird. Ferner liegt der vorliegenden Erfindung die Aufgabe zugrunde ein Verfahren zum Befüllen oder Entleeren eines Behälters mit bzw. von einem Füllgut bereitzustellen, bei welchem die Befüllung oder Entleerung eines Behälters mit bzw. von einem Füllgut zumindest teilweise automatisiert und energieautark ausgeführt werden kann und zudem eine erhöhte Zuverlässigkeit und Sicherheit gewährleistet wird.

Zur Lösung dieser Aufgabe wird eine Messvorrichtung mit den Merkmalen des Anspruchs 1 sowie ein Verfahren mit den Merkmalen des Anspruchs 11 vorgeschlagen. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Erfindungsgemäß vorgeschlagen wird gemäß Anspruch 1 eine Messvorrichtung zur Erfassung eines Füll- oder Grenzstands eines Füllguts in einem Behälter, wobei die Messvorrichtung dazu ausgebildet ist, an dem Behälter angeordnet zu werden, umfassend einen Sensor zur Bestimmung des Füll- oder Grenzstands, eine Energieversorgungseinheit, die mit dem Sensor elektrisch verbunden und zur Versorgung des Sensors mit elektrischer Energie ausgebildet und eingerichtet ist, sowie eine Aktivierungseinheit, die signaltechnisch zumindest mit der Energieversorgungseinheit verbunden ist. Dabei ist die Aktivierungseinheit dazu ausgebildet und eingerichtet, in Folge einer Betätigung, beim Verbinden des Behälters mit einer Füll- oder Entleerungseinrichtung, durch ein an dem Behälter und/oder der Füll- oder Entleerungseinrichtung vorgesehenes Betätigungsmittel, den Sensor zu aktivieren und von einem inaktiven-Modus in einen Betriebsmodus zu versetzen.

Die erfindungsgemäß vorgeschlagene Messvorrichtung kann auf unterschiedlichsten Messverfahren zur Füll- oder Grenzstandmessung beruhen, insbesondere jedoch auf einem kontaktlosen Messverfahren zur Bestimmung des Füll- oder Grenzstands. Kontaktlos meint dabei, dabei, dass der Sensor bei der Messung des Füll- oder Grenzstands vorzugsweise nicht mit dem Füllgut in Kontakt kommt. Dies schließt jedoch nicht aus, dass während der Befüllung oder während des Entleerens einzelne Partikel, Tröpfchen oder dergleichen mit dem Sensor in Kontakt geraten. Vielmehr ist unter einer kontaktlosen Messung in diesem Zusammenhang zu verstehen, dass die Messung des Füll- oder Grenzstands als solche auf einer kontaktlosen Messung basiert. Bei einer solchen kontaktlosen Messung kann es sich - wie einleitend erwähnt - insbesondere um laufzeitbasierte Verfahren wie Radar oder Ultraschall, hydrostatische Verfahren (z.B. Druckmessungen), kapazitive oder radiometrische Verfahren handeln. Auch optische Verfahren können grundsätzlich zur Füll- oder Grenzstandmessung eingesetzt werden.

Wie erwähnt, ist die Messvorrichtung dazu ausgebildet, an dem Behälter angeordnet zu werden. Unter einer "Anordnung" kann dabei eine unlösbare oder lösbare Befestigung der Messvorrichtung an dem Behälter verstanden werden. Die räumliche Position zur Anordnung der Messvorrichtung, insbesondere des Sensors, an dem Behälter, ist dabei nicht festgelegt. Beispielsweise kann vorgesehen sein, dass die Messvorrichtung, insbesondere der Sensor, in eine Wand des Behälters eingelassen oder eingeschraubt ist. Gleichermaßen ist vorstellbar, dass die Messvorrichtung an einer Innenwand des Behälters verschraubt, verschweißt, über eine Form- oder Kraftschlussverbindung befestigt oder anderweitig an dieser befestigt ist. Vorzugsweise ist zumindest ein Teil des Sensors im Innenraum des Behälters angeordnet bzw. ragt in diesen hinein, insbesondere um zu gewährleisten, dass von dem Sensor ausgehende Signale in Richtung des in dem Behälter befindlichen Füllguts ausgesandt werden können und von bzw. an dem Füllgut abgestrahlte, rückgestreute, reflektierte oder ausgesendete Signale von dem Sensor detektiert werden können.

Wie erwähnt, umfasst die mit der Erfindung vorgeschlagene Messvorrichtung neben dem Sensor auch eine Energieversorgungseinheit und eine Aktivierungseinheit. Diese der Messvorrichtung zugehörigen Komponenten können in einem gemeinsamen Gehäuse assembliert, jedoch auch separat angeordnet sein, solange eine elektrische Verbindung zwischen der Energieversorgungseinheit und dem Sensor sowie eine signaltechnische Verbindung zwischen der Aktivierungseinheit und der Energieversorgungseinheit gewährleistet ist. Die elektrische Verbindung kann dabei kabelgebunden verwirklicht sein, z.B. über flexible Kabel wie ein Flachbandkabel, oder anderweitige elektrische Leiter. Bei einem solchen Leiter kann es sich beispielsweise auch um auf einer Platine ausgebildete Leiterbahnen handeln. Gleichermaßen kommt eine elektrische Verbindung über geeignete Steckverbinder oder Verbindungsdrähte in Betracht. Die elektrische Verbindung kann eine Strom- bzw. Spannungsübertragung zwischen Energieversorgungseinheit und Sensor bereitstellen, jedoch auch zur Übertragung von Signalen eingerichtet sein, beispielsweise in Form elektrischer Spannungen. Bei der signaltechnischen Verbindung zwischen der Aktivierungseinheit und der Energieversorgungseinheit kann es sich um eine kabelgebundene Verbindung oder eine kabellose Verbindung handeln.

Erfindungsgemäß ist die Aktivierungseinheit dazu ausgebildet und eingerichtet, in Folge einer Betätigung, beim Verbinden des Behälters mit der Füll-oder Entleerungseinrichtung, durch ein an dem Behälter und/oder der Füll- oder Entleerungseinrichtung vorgesehenes Betätigungsmittel, den Sensor zu aktivieren und von einem inaktiven-Modus in einen Betriebsmodus zu versetzen. Dadurch wird ermöglicht, den Sensor bedarfsgerecht zu betreiben und nur in jenen Situationen in einen Betriebsmodus zu versetzen, in welchen eine Messung des Füll- oder Grenzstands tatsächlich erforderlich ist. Dabei ist es vorteilhaft, den Sensor lediglich dann in einen Betriebsmodus zu versetzen, wenn eine tatsächliche Befüllung oder Entleerung des Behälters bevorsteht. Dazu kann vorgesehen sein, dass der Sensor beim Verbinden des Behälters mit einer Füll- oder Entleerungseinrichtung, insbesondere einem der Füll- oder Entleerungseinrichtung zugehörigen Schlauch oder Stutzen, über das an dem Behälter und/oder der Füll- oder Entleerungseinrichtung vorgesehenes Betätigungsmittel aktiviert wird. Unter einem "inaktiven-Modus" kann ein Zustand verstanden werden, bei dem der Sensor keine oder eine verringerte Energieversorgung erfährt, insbesondere im Vergleich zu einer im Betriebsmodus bereitgestellten Energieversorgung. Unter einem "inaktiven-Modus" kann demnach auch ein Sleep-Modus verstanden werden, in welchem eine verringerte Energieversorgung erfolgt.

Zur Aktivierung kann die Aktivierungseinheit ein Steuersignal an die Energieversorgungseinheit weitergeben, in Folge dessen die Energieversorgung des Sensors über die Energieversorgungseinheit bereitgestellt und der Sensor in einen Betriebsmodus versetzt wird. Die dabei bereitgestellte Nutzspannung bzw. der bereitgestellte Nutzstrom können von einer im inaktiven-Modus bereitgestellten inaktiv-Spannung bzw. einem inaktiv-Strom abweichen. Insbesondere können die Nutzspannung bzw. der Nutzstrom einen höheren Wert annehmen als die inaktiv-Spannung bzw. der inaktiv-Strom. Die inaktiv-Spannung bzw. der inaktiv-Strom kann Null sein. Auch kann die inaktiv-Spannung bzw. der inaktiv-Strom einen im Vergleich zur Nutzspannung bzw. zum Nutzstrom reduzierten Wert annehmen, mit welchem jedoch eine Grundversorgung des Sensors gewährleistet sein kann. Letzteres kann einem Sleep-Modus entsprechen. Entsprechend kann der Sensor auch im inaktiv-Modus mit einer vorgebbaren inaktiv-Spannung bzw. inaktiv-Strom versorgt werden, insbesondere um eine schnelle Aktivierung bzw. einen Signalempfang eines Aktivierungssignals zu ermöglichen.

Das an dem Behälter und/oder der Füll- oder Entleerungseinrichtung vorgesehene Betätigungsmittel steht in einer Signalverbindung oder anderweitigen, beispielsweise (elektro)-mechanischen Wirkverbindung mit der Aktivierungseinheit. Beim Verbinden des Behälters mit der Füll- oder Entleerungseinrichtung wird zunächst die Aktivierungseinheit über das Betätigungsmittel betätigt, beispielsweise über die Weiterleitung eines Steuersignals (über die Signalverbindung) oder eine (elektro)-mechanische Kontaktierung. Das an dem Behälter und/oder der Füll-oder Entleerungseinrichtung vorgesehene Betätigungsmittel wird beim Verbinden des Behälters mit der Füll- oder Entleerungseinrichtung ebenfalls aktiviert, insbesondere dahingehend, eine Betätigung der Aktivierungseinheit zu veranlassen bzw. auszuüben.

Die erfindungsgemäße Messvorrichtung weist im Vergleich zu den aus dem Stand der Technik bekannten Systemen eine vorteilhafte Energieausnutzung bzw. Energieeffizienz auf, die auf dem Prinzip einer bedarfsgesteuerten Energieversorgung beruht. Insbesondere bei mobilen Behältern, die in der Industrie insbesondere als Transport-, Abfall-, oder Entsorgungsbehälter verwendet werden, ist eine solche bedarfsgesteuerte Energieversorgung einer an dem Behälter angeordneten Messvorrichtung mit Vorteilen verbunden. Dadurch wird lediglich im Bedarfsfall einer Befüllung oder Entleerung, also beim Verbinden des Behälters mit der Füll- oder Entleerungseinrichtung, eine zum Betrieb des Sensors erforderliche Energieversorgung bereitgestellt. Zu jenen Zeitpunkten, an welchen keine Befüllung erfolgt, befindet sich der Sensor in einem inaktiv-Modus, in welchem - im Vergleich zum Betriebsmodus - keine bzw. eine geringere Energieversorgung des Sensors bereitgestellt werden muss. Eine unnötige bzw. übermäßige Energieversorgung des Sensors zu Zeiten, in welchen der Sensor keine Verwendung findet, wird dadurch vermieden. Ferner führt eine derartige Ausgestaltung zu einer erhöhten Lebensdauer der Messvorrichtung, insbesondere bei Vorsehen einer Batterie oder eines Akkus als Bestandteil bzw. Energiequelle der Energieversorgungseinheit.

Weitere vorteilhafte Ausgestaltungen der Erfindung, insbesondere der erfindungsgemäßen Messvorrichtung, sind in den Unteransprüchen angegeben. Die in den Unteransprüchen genannten Ausgestaltungen sowie weitere vorteilhafte Ausgestaltungen der Erfindung seien nachfolgend beschrieben.

Nach einer vorteilhaften Ausgestaltung einer erfindungsgemäßen Messvorrichtung kann vorgesehen sein, dass die Aktivierungseinheit dazu eingerichtet ist, den Sensor im Wege einer Aktivierung der Energieversorgung zwischen der Energieversorgungseinheit und dem Sensor von einem inaktiv-Modus in einen Betriebsmodus zu versetzen. Wie schon vorangehend erwähnt, erfolgt die Statusänderung des Sensors vom inaktiv-Modus in den Betriebsmodus durch eine Aktivierung der Energieversorgung zwischen der Energieversorgungseinheit und dem Sensor. Vorzugsweise aktiviert die Aktivierungseinheit also nicht unmittelbar den Sensor als solchen, sondern veranlasst die Bereitstellung der in einem Betriebsmodus des Sensors benötigten Energie über die Energieversorgungseinheit. Vorteilhaft ist also eine Ausgestaltung, bei welcher die Aktivierungseinheit ein Signal bzw. einen Befehl zur Bereitstellung der zum Betrieb des Sensors benötigten Energie, z.B. einer Nutzspannung oder einem Nutzstrom, an die Energieversorgungseinheit weitergibt. Bei dem weitergegebenen Befehl kann es sich um ein elektrisches Signal, insbesondere einen elektrischen Impuls, handeln. Die Signalweitergabe kann analog oder digital erfolgen. Seitens der Energieversorgungseinheit kann eine Empfangsschnittstelle vorgesehen sein, welche dazu ausgebildet und eingerichtet ist, das von der Aktivierungseinheit weitergeleitete Signal, insbesondere ein Aktivierungssignal, zu empfangen. Dabei ist die Empfangsschnittstelle oder ein damit verbundener Mikrocontroller dazu ausgebildet und eingerichtet, in Folge des Empfangs des Aktivierungssignals die Energieversorgung des Sensors zu initiieren.

Nach einer weiteren vorteilhaften Ausgestaltung einer erfindungsgemäßen Messvorrichtung kann vorgesehen sein, dass die Energieversorgungseinheit zumindest eine Batterie oder einen Akku umfasst. Die Batterie bzw. der Akku fungieren hierbei als Energiespeicher, welche die zur Versorgung des Sensors im Betriebsmodus erforderliche Energie bereitstellen. Batterien und Akkus werden auf elektrochemischer Basis betrieben. Auch anderweitige Energiespeicher können eine solche Funktion bei einer erfindungsgemäßen Messvorrichtung erfüllen. Vorgesehen sein kann zudem, dass die Batterie bzw. der Akku (oder ein anderweitiger Energiespeicher) die Energieversorgung des Sensors im inaktiv-Modus bereitstellt, insbesondere eine inaktiv-Spannung bzw. einen inaktiv-Strom, wobei die inaktiv-Spannung bzw. der inaktiv-Strom einen geringeren Wert annehmen als die beim Betrieb des Sensors benötigte Nutzspannung bzw. der Nutzstrom. In jenem Falle, bei dem der Sensor keine Energieversorgung erfährt (vollständig ausgeschalteter Zustand) ist die inaktiv-Spannung bzw. der inaktiv-Strom gleich Null. Weiterhin kann vorgesehen sein, dass die Energieversorgungseinheit, insbesondere die Batterie bzw. der Akku (oder ein anderweitiger Energiespeicher), die Energieversorgung weiterer Bauteile der Messvorrichtung (nebst dem Sensor) bereitstellt. Unter einer "Batterie" bzw. einem "Akku" ist im Rahmen der vorliegenden Erfindung nicht zwingend eine Einzelbatterie bzw. ein Einzelakku zu verstehen, gleichsam können darunter auch eine Mehrzahl von Batterien (z.B. ein Batteriepack) oder eine Mehrzahl von Akkus (z.B. ein Akkupack) zu verstehen sein. Unter einem "Akku" ist im Sinne der Erfindung ein wiederaufladbarer Energiespeicher zu verstehen.

Nach einer weiteren vorteilhaften Ausgestaltung einer erfindungsgemäßen Messvorrichtung kann vorgesehen sein, dass die Aktivierungseinheit mechanisch, elektrisch, optisch, magnetisch oder elektromagnetisch betätigbar ist. Wie schon vorangehend erwähnt, kann die Aktivierungseinheit in Folge einer Betätigung über ein an dem Behälter und/oder der Füll- oder Entleerungseinrichtung vorgesehenes Betätigungsmittel den Sensor aktivieren bzw. die Versorgung des Sensors mit der im Betriebsmodus erforderlichen Energie initiieren. Wie die vorangehend bezüglich der Anordnung des Betätigungsmittels erwähnte "und/oder" Verknüpfung zum Ausdruck bringt, kann das Betätigungsmittel ein einzig an dem Behälter oder ein einzig an der Füll- oder Entleerungseinrichtung angeordnetes Bauelement umfassen, oder aber zumindest zweiteilig aufgebaut sein, wobei in diesem Fall zumindest ein Bauelement des Betätigungsmittels an dem Behälter und ein Bauelement des Betätigungsmittels an der Füll- oder Entleerungseinrichtung angeordnet ist. Beide Bauelemente können dann beim Verbinden der Füll-oder Entleerungseinrichtung mit dem Behälter zusammenwirken (z.B. über einen mechanischen oder elektrischen Kontakt) und bewirken gemeinsam eine Betätigung der Aktivierungseinheit.

Wie erwähnt, kann die Aktivierungseinheit mechanisch betätigbar sein. Dazu kann die Aktivierungseinheit eine mechanisch betätigbare Schnittstelle aufweisen, beispielsweise einen Schalter oder Hebel, die insbesondere über ein mechanisches Betätigungsmittel (z.B. ein Gestänge oder einen Stößel) betätigbar ist. Beim Verbinden der Füll- oder Entleerungseinrichtung mit dem Behälter wird das (mechanische) Betätigungsmittel in eine Bewegung versetzt bzw. ein entsprechender mechanischer Mechanismus ausgelöst, mit welcher unmittelbar oder mittelbar die mechanische Schnittstelle der Aktivierungseinheit betätigt werden kann.

Weiterhin kann die Aktivierungseinheit elektrisch betätigbar sein und eine elektrische Schnittstelle aufweisen, um von dem Betätigungsmittel ausgesendete elektrische Betätigungssignale zu empfangen. Elektrische Betätigungssignale können beispielsweise elektrische Spannungen oder Ströme sein.

Unter einer optischen Betätigung ist insbesondere das Aussenden eines optischen Signals, z.B. eines Licht- oder Laserpulses über eine Leucht- oder Laserdiode, seitens des Betätigungsmittels sowie das Empfangen des optischen Signals seitens einer optischen Schnittstelle der Aktivierungseinheit zu verstehen. Aus dem empfangenen optischen Signal kann ein elektrisches Signal erzeugt werden, die Betätigung kann entsprechend auch optoelektronisch erfolgen. Die optische Schnittstelle kann beispielsweise eine Kameraeinheit, eine Fotodiode, ein lichtempfindlicher Widerstand oder ein Fototransistor sein. Diese Auflistung ist nicht abschließend.

Unter einer magnetischen Betätigung kann die Annäherung zweier Magnete (diese können gleichgerichtet oder entgegengesetzt polarisiert sein) verstanden werden. Dabei kann ein Magnet auf der Seite des Betätigungsmittels und ein Magnet auf der Seite der Aktivierungseinheit angeordnet sein. Bei Erreichen einer definierten magnetischen Flussdichte an einem vorbestimmten Ortspunkt, kann die Betätigung der Aktivierungseinheit ausgelöst werden. Die Bestimmung der magnetischen Flussdichte kann über einen Magnetfeldsensor, beispielsweise einen Hall-Sensor erfolgen. Bei den erwähnten Magneten kann es sich um Permanentmagnete oder Elektromagnete handeln. Die Betätigung zwischen Betätigungsmittel und Aktivierungseinheit kann auch über einen Reed-Schalter erfolgen.

Unter einer elektromagnetischen Betätigung ist das Aussenden eines elektromagnetischen Signals vorbestimmter Frequenz in Richtung eines auf den Empfang eines solchen elektromagnetischen Signals ausgelegten Empfängers seitens der Aktivierungseinheit zu verstehen. Nach dem Empfang des Signals initiiert die Aktivierungseinheit die Aktivierung des Sensors. Der Empfänger kann dabei ausschließlich zum Empfang der Signale ausgebildet sein ("Receive-Mode") oder alternativ zum Empfangen und Aussenden von Signalen ("Transmit-Receive Mode"). Auch die auf der Seite des Betätigungsmittels vorgesehene Einheit kann entweder als reine Sendeeinheit ("Transmit-Mode") oder als "Transmit-Receive" Einheit ausgebildet sein. Eine elektromagnetische Sende- und/oder Empfangseinheit kann insbesondere eine Antenne umfassen, beispielsweise in Form einer Radiofrequenz-Spule, die in einen rf-Schwingkreis eingebunden ist.

Nach einer weiteren vorteilhaften Ausgestaltung einer erfindungsgemäßen Messvorrichtung kann vorgesehen sein, dass die Messvorrichtung dazu ausgebildet und eingerichtet ist, in Folge der Aktivierung des Sensors einen Funktionsfähigkeits-Test auszuführen, bei dem eine Funktionsfähigkeits-Bewertung zur Feststellung einer positiven oder negativen Funktionsfähigkeit des Sensors vorgenommen wird, und im Falle einer positiven Funktionsfähigkeit ein Füll- oder Entleerungs-Freigabesignal an eine dem Behälter und/oder der Füll- oder Entleerungseinrichtung zugeordneten Steuereinheit weiterzuleiten. Insbesondere kann der Funktionsfähigkeits-Test also durchgeführt werden, sobald die Versorgung des Sensors mit einer im Betriebsmodus erforderlichen Nutzspannung bzw. einem Nutzstrom gewährleistet ist. Bei der Ausführung des Funktionsfähigkeitstest kann die Energieversorgung des Sensors geprüft werden, gleichsam kann aber auch eine Test- oder Referenzmessung, beispielsweise im Sinne einer Nullwertmessung, durchgeführt werden. Auch eine Kalibrierroutine oder Prüfroutine kann dem Funktionsfähigkeits-Test gegenständlich sein. Durch einen solchen Funktionsfähigkeits-Test und eine daran gekoppelte Freigabe der Befüllung oder entleerung wird die Prozesssicherheit beim Befüllen oder Entleeren eines Behälters mit bzw. von einem Füllgut inhärent erhöht, denn dadurch wird die Wahrscheinlichkeit einer Fehlfunktion des Sensors reduziert. Im Falle einer fehlerhaften Bestimmung des Füll- oder Grenzstands besteht die Gefahr einer Überfüllung bzw. eines Auslaufens des Behälters. In manchen Anwendungen mag zudem das maximale Füllgewicht des Behälters limitiert sein, beispielsweise aus Transportgründen, weshalb es von Bedeutung ist, ein Überschreiten eines solchen Füllgewichts in diesen Fällen zu vermeiden. Dazu liefert der o.g. Funktionsfähigkeits-Test Abhilfe. Im Falle der Feststellung einer negativen Funktionsfähigkeit kann vorgesehen sein, den Funktionsfähigkeits-Test zu wiederholen oder das Freigabesignal zu verweigern.

Nach einer weiteren vorteilhaften Ausgestaltung einer erfindungsgemäßen Messvorrichtung kann die Messvorrichtung eine Kommunikationseinheit umfassen, die dazu ausgebildet und eingerichtet ist, kabellos oder kabelgebunden Signale zu empfangen und auszusenden (also zu übertragen), beispielsweise von bzw. an die dem Behälter und/oder der Füll- oder Entleerungseinrichtung zugeordneten Steuereinheit. Unter einer kabellosen Signalübertragung kann hierbei eine Nahfeld- oder Fernfeldkommunikation verstanden werden. Insbesondere kommt dazu eine Funkverbindung in Betracht, die auf sämtlichen zum Zeitpunkt der Anmeldung bekannten oder künftig entwickelten Kommunikationsstandards beruhen kann. Die Kommunikationseinheit kann an die Energieversorgungseinheit gekoppelt sein. Vorzugsweise kann die Kommunikationseinheit auch bei einer Spannungs- oder Stromversorgung, die der inaktiv-Spannung bzw. dem inaktiv-Strom entspricht, Signale empfangen. In Folge des Signalempfangs kann jedoch vorgesehen sein, die Kommunikationseinheit mit einer oberhalb der inaktiv-Spannung bzw. dem inaktiv-Strom liegenden Nutzspannung bzw. einem Nutzstrom zu versorgen.

Nach einer weiteren vorteilhaften Ausgestaltung einer erfindungsgemäßen Messvorrichtung kann vorgesehen sein, dass die Messvorrichtung dazu ausgebildet und eingerichtet ist, in Folge der Bestimmung des Füll- oder Grenzstands und einer dahingehenden Feststellung, dass ein vorgegebener Füll- oder Grenzstand erreicht ist, ein Füll- oder Entleerungsvorgangs-Beendigungssignal in Richtung der dem Behälter und/oder der Füll- oder Entleerungseinrichtung zugeordneten Steuereinheit weiterzuleiten. Dies kann insbesondere über die vorangehend erwähnte Kommunikationseinheit erfolgen. Auch die dem Behälter und/oder der Füll- oder Entleerungseinrichtung zugeordnete Steuereinheit kann eine entsprechende Kommunikationseinheit oder Empfangseinheit aufweisen, mit welcher das genannte Füll- oder Entleerungsvorgangs-Beendigungssignal erfasst werden kann. Gleichsam kann das vorangehend erwähnte Füll- oder Entleerungs-Freigabesignal über die Kommunikationseinheit der Messvorrichtung an die dem Behälter und/oder der Füll- oder Entleerungseinrichtung zugeordnete Steuereinheit übertragen werden. In Folge der Weiterleitung des Füll- oder Entleerungsvorgangs-Beendigungssignals an die Steuereinheit des Behälters und/oder der Füll- oder Entleerungseinrichtung kann beispielsweise ein Ventil oder eine Ventilanordnung geschlossen werden. Das Ventil oder die Ventilanordnung kann an der Füll- oder Entleerungseinrichtung angeordnet sein, alternativ oder zusätzlich aber auch an dem Behälter. Auch kann ein Stutzen der Füll- oder Entleerungseinrichtung einen Mechanismus aufweisen, der bei Weiterleiten des Füll- oder Entleerungsvorgangs-Beendigungssignals eine weitere Befüllung oder Entleerung des Behälters mit bzw. von Füllgut verhindert. Auch kann in Folge der Weiterleitung des Füll- oder Entleerungsvorgangs-Beendigungssignals eine anderweitige Sperrvorrichtung des Behälters und/oder der Füll- oder Entleerungseinrichtung aktiviert werden, die ein Befüllen oder Entleeren des Behälters verhindert.

Erfindungsgemäß ist vorgesehen, dass die Messvorrichtung dazu ausgebildet eingerichtet ist, den Sensor nach Beendigung eines Füll- oder Entleerungsvorgangs von einem Betriebsmodus in einen inaktiv-Modus zu versetzen. Nach einer vollendeten Befüllung bzw. Entleerung besteht i.d.R. kein Bedarf mehr einen aktiven Betriebsmodus des Sensors aufrechtzuerhalten. Entsprechend ist es von Vorteil den Sensor nach abgeschlossener Befüllung oder Entleerung des Behälters, also einem Zustand zu dem keine aktive Sensierung des Füll- oder Grenzstands mehr notwendig ist, lediglich mit einer inaktiv-Spannung bzw. einem inaktiv-Strom elektrisch zu versorgen, sodass in einem solchen inaktiv-Modus zwar keine Füll- oder Grenzstandmessung mehr durchgeführt werden kann, jedoch eine ausreichende Energieversorgung bereitgestellt ist, um den Sensor innerhalb kurzer Zeit in einen Betriebsmodus zu versetzen. Auch kann im inaktiv-Modus ein vollstündiges Ausschalten des Sensors vorgesehen sein.

Nach einer weiteren vorteilhaften Ausgestaltung einer erfindungsgemäßen Messvorrichtung kann vorgesehen sein, dass der Sensor ein Vibrationssensor, ein kapazitiver Sensor, ein Impedanzsensor, ein Radarsensor, ein optischer Sensor oder ein TDR-Sensor ist. Die Messvorrichtung kann zudem redundant ausgebildet sein und eine Mehrzahl der vorstehend genannten Sensoren gleicher oder unterschiedlicher Art aufweisen. Die Funktionsprinzipien der vorstehend genannten Sensortypen sind aus dem Stand der Technik allgemein bekannt, weshalb an dieser Stelle nicht näher darauf einzugehen ist.

Nach einer weiteren vorteilhaften Ausgestaltung einer erfindungsgemäßen Messvorrichtung kann vorgesehen sein, dass die Messvorrichtung dazu ausgebildet und eingerichtet ist, vor oder während des Befüllens oder Entleeren des Behälters mit dem Füllgut, zwischen der Messvorrichtung und der dem Behälter und/oder der Füll- oder Entleerungseinrichtung zugeordneten Steuereinheit einen Signalaustausch, beispielsweise einen Daten-Handshake, auszuführen. Über einen solchen Signalaustausch zwischen Messvorrichtung und der dem Behälter und/oder der Füll- oder Entleerungseinrichtung zugeordneten Steuereinheit kann gewährleistet werden, dass ein mit einer Messvorrichtung versehener Behälter mit der richtigen bzw. gewünschten Füll- oder Entleerungseinrichtung verbunden ist. Über den Signalaustausch können zur Erkennung bzw. Identifikation vorgesehene Informationen gegenseitig ausgetauscht und verifiziert werden, insbesondere vor dem Beginn des Befüllens. Alternativ oder zusätzlich kann vorgesehen sein, auch während des Füll- oder Entleerungsvorgangs einen Signalaustausch, beispielsweise einen Daten-Handshake, zwischen der Messvorrichtung und der dem Behälter und/oder der Füll- oder Entleerungseinrichtung zugeordneten Steuereinheit vorzunehmen. So können auch während des Füllvorgangs oder Entleerungsvorgangs Messdaten (dies können z.B. Rohdaten der Füll- oder Grenzstandmessung oder ausgewertete Angaben zum Füll- oder Grenzstand sein) an die Steuereinheit übermittelt werden. Umgekehrt können auch füllvorgangsbezogene oder entleerungsvorgangsbezogene Daten von der Steuereinheit in Richtung der Messvorrichtung übermittelt werden, die möglicherweise bei der Füllstand- oder Grenzstandmessung berücksichtigt werden können. Auch mögliche Betriebsfehler lassen sich bidirektional zwischen der Steuereinheit und der Messvorrichtung austauschen. Die Zuverlässigkeit und Prozesssicherheit der Messvorrichtung und den damit zusammenwirkenden Komponenten wird durch eine solche Ausgestaltung weiter verbessert.

Nach einer weiteren vorteilhaften Ausgestaltung einer erfindungsgemäßen Messvorrichtung kann die Messvorrichtung eine Energieerzeugungseinheit umfassen, insbesondere eine Solareinheit, die mit der Energieversorgungseinheit elektrisch verbunden ist und dazu ausgebildet und eingerichtet ist, die Energieversorgungseinheit aufzuladen. Durch eine solche Ausgestaltung wird die mobile Einsatzfähigkeit der Messvorrichtung weiter optimiert. Bei einer derartigen Ausgestaltung wird die Notwendigkeit eines Austauschs des Energiespeichers (z.B. einer Batterie oder eines Akkus bei Verlust seiner Ladekapazität) vermieden. Auch ein manuelles Aufladen eines Akkus ist bei einer solchen Ausgestaltung nicht erforderlich.

Nebst der vorangehend beschriebenen erfindungsgemäßen Messvorrichtung sowie der zugehörigen vorteilhaften Ausgestaltungsmerkmale wird die erfindungsgemäße Aufgabe mit einem Verfahren zum Befüllen oder Entleeren eines Behälters mit bzw. von einem Füllgut gelöst. Die vorstehend erwähnten vorteilhaften Ausgestaltungen einer erfindungsgemäßen Messvorrichtung eignen sich auch als Ausgestaltungsmerkmale eines erfindungsgemäßen Verfahrens.

Erfindungsgemäß vorgeschlagen wird gemäß Anspruch 11 ein Verfahren zum Befüllen oder Entleeren eines Behälters mit bzw. von einem Füllgut, unter Einsatz einer Füll- oder Entleerungseinrichtung und einer erfindungsgemäß ausgebildeten und an dem Behälter angeordneten Messvorrichtung, wobei die Messvorrichtung umfasst: einen Sensor zur Bestimmung des Füll- oder Grenzstands, eine Energieversorgungseinheit, die mit dem Sensor elektrisch verbunden ist, sowie eine Aktivierungseinheit, die signaltechnisch zumindest mit der Energieversorgungseinheit verbunden ist, umfassend die folgenden Schritte:
a) Verbinden der Füll- oder Entleerungseinrichtung mit dem Behälter;
b) Betätigen der Aktivierungseinheit durch ein an dem Behälter und/oder der Füll- oder Entleerungseinrichtung vorgesehenes Betätigungsmittel, wobei die Betätigung während oder nachfolgend zum Schritt a) erfolgt;
c) in Folge des Verfahrensschritts b): Aktivieren des Sensors und Versetzen desselbigen von einem inaktiv-Modus in einen Betriebsmodus;
d) Befüllen oder Entleeren des Behälters mit dem Füllgut, wobei während des Befüllens oder Entleeren kontinuierlich oder diskontinuierlich der Füll- oder Grenzstand unter Einsatz des Sensors bestimmt wird,
e) bei Erreichen eines vorgegebenen Füll- oder Grenzstandes: Beenden des Füllvorgangs oder Entleerungsvorgangs;
f) nach Beendigung des Füllvorgangs oder Entleerungsvorgangs: Versetzen des Sensors von einem Betriebsmodus in einen inaktiv-Modus.

In dem genannten Verfahrensschritt a) kann insbesondere ein an einer Leitung der Füll- oder Entleerungseinrichtung angeordneter Stutzen auf eine an dem Behälter ausgebildete Einfüllöffnung- oder Auslassöffnung angeordnet und arretiert werden. Das Verbinden kann manuell, teilautomatisiert oder vollautomatisiert erfolgen.

Nach einer vorteilhaften Ausgestaltung eines erfindungsgemäßen Verfahrens kann vorgesehen sein, dass in Folge der Aktivierung des Sensors, ein Funktionsfähigkeits-Test ausgeführt wird, bei dem eine Funktionsfähigkeits-Bewertung des Sensors vorgenommen wird, und im Falle einer Positiventscheidung (bezüglich der Funktionsfähigkeit) ein Füll-oder Entleerungs-Freigabesignal an eine dem Behälter und/oder der Füll- oder Entleerungseinrichtung zugeordneten Steuereinheit weiterzuleiten. Im Falle einer Negativentscheidung (bezüglich der Funktionsfähigkeit) hingegen, also in jenem Fall, bei dem keine ausreichende Funktionsfähigkeit des Sensors festgestellt werden kann, wird kein Füll-oder Entleerungs-Freigabesignal an die Steuereinheit weitergegeben. In diesem Fall kann vorgesehen sein, den Funktionsfähigkeits-Test zu wiederholen, oder über ein Anzeigemittel ein Warnsignal auszugeben, beispielsweise ein akustisches oder optisches Warnsignal.

Nach einer weiteren vorteilhaften Ausgestaltung eines erfindungsgemäßen Verfahrens kann vorgesehen sein, dass die Messvorrichtung in Folge einer jeweiligen Bestimmung des Füll- oder Grenzstands einen Abgleich des bestimmten Füll- oder Grenzstands mit einem vorgegebenen Füll- oder Grenzstand vornimmt, und dass die Messvorrichtung im Falle des Erreichens des vorgegebenen Füll- oder Grenzstands ein Füll- oder Entleerungsvorgangs-Beendigungssignal in Richtung der dem Behälter und/oder der Füll- oder Entleerungseinrichtung zugeordneten Steuereinheit weiterleitet, beispielsweise über die Kommunikationseinheit.

Nach einer weiteren vorteilhaften Ausgestaltung eines erfindungsgemäßen Verfahrens kann vorgesehen sein, dass vor oder während des Befüllens oder Entleerens des Behälters mit bzw. von dem Füllgut, zwischen der Messvorrichtung und der dem Behälter und/oder der Füll- oder Entleerungseinrichtung zugeordneten Steuereinheit ein Signalaustausch, beispielsweise ein Daten-Handshake, ausgeführt wird.

Details zu den vorgenannten vorteilhaften Verfahrensausgestaltungen wurden bereits im Rahmen der Diskussion vorteilhafter Ausgestaltungen einer erfindungsgemäßen Messvorrichtung beschrieben, weshalb an dieser Stelle auf die diesbezüglichen Ausführungen verwiesen sei.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Figur 1:: eine schematische Darstellung einer Befestigungsvariante einer Messvorrichtung zur Füllstand- oder Grenzstandmessung an einem Behälter;
- Figur 2:: eine schematische Darstellung des Funktionsprinzips einer an einem Behälter angeordneten erfindungsgemäßen Messvorrichtung beim Befüllen oder Entleeren des Behälters mit einem Füllgut über eine Füll- oder Entleerungseinrichtung.

In den unterschiedlichen Figuren sind hinsichtlich ihrer Funktion gleichwertige Teile stets mit denselben Bezugszeichen versehen, so dass diese in der Regel auch nur einmal beschrieben werden.

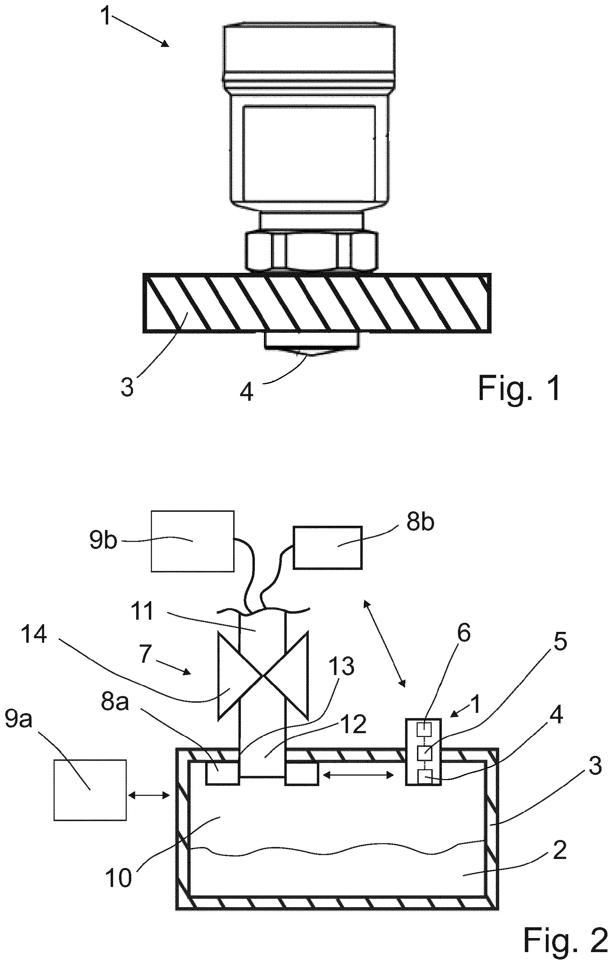

Die Figur 1 zeigt eine Anordnungsvariante einer Messvorrichtung 1 zur Erfassung eines Füll- oder Grenzstands an einem Behälter 3. Nach der dargestellten Variante ist die Messvorrichtung 1 in einer Wand (hier dargestellt ist ein Wandausschnitt) des Behälters 3 eingeschraubt, wobei ein der Messvorrichtung 1 zugehöriger Sensor 4 dem Innenraum 10 des Behälters angeordnet ist. Alternativ zu einer Schraubbefestigung kann die Messvorrichtung 1 auch auf andere Art und Weise an oder in dem Behälter 3 angeordnet bzw. sein.

In der Figur 2 ist in stark schematisierter Darstellung das Funktionsprinzip einer an einem Behälter 3 angeordneten Messvorrichtung 1 beim Befüllen oder Entleeren des Behälters 3 mit einem Füllgut 2 über eine Füll- oder Entleerungseinrichtung 7 wiedergegeben. Schematisch dargestellt ist zunächst, dass die Messvorrichtung 1 eine Mehrzahl unterschiedlicher Funktionseinheiten aufweist, im Speziellen einen Sensor 4, eine mit dem Sensor 4 elektrisch verbundene Energieversorgungseinheit 5 und eine Aktivierungseinheit 6, die signaltechnisch zumindest mit der Energieversorgungseinheit 5 verbunden ist. Zudem weist die Messvorrichtung in vorteilhafter Weise eine (nicht dargestellte) Kommunikationseinheit auf.

Zum Befüllen oder Entleeren des Behälters 3 mit bzw. von einem Füllgut 2 wird der Behälter 3 mit einer Füll- oder Entleerungseinrichtung 7 verbunden. Diese weist eine Leitung 11 und einen Stutzen 12 auf, welcher in eine Einfüllöffnung bzw. Auslassöffnung 13 des Behälters 3 ein- oder aufgesetzt wird. Zwischen der Leitung 11 und dem Stutzen 12 ist ein Ventil 14 angeordnet, über welches das Füllgut 2 in den Behälter 3 ein- oder ausgelassen wird. Die dargestellte Position der Einfüllöffnung bzw. Auslassöffnung 13 ist lediglich beispielhafter Natur.

An dem Behälter 3 und/oder der Füll- oder Entleerungseinrichtung 7 ist ein Betätigungsmittel 8a, 8b vorgesehen, mit welchem die Aktivierungseinheit 6 beim Verbinden des Behälters 3 mit der Füll- oder Entleerungseinrichtung 7, insbesondere beim Aufsetzen des Stutzens 12 in die Einfüllöffnung bzw. Auslassöffnung 13 des Behälters 3, betätigt wird, beispielsweise mechanisch oder im Wege einer Datenübertragung (hier dargestellt durch die Doppelpfeile). In Folge der Betätigung initiiert die die Aktivierungseinheit 6 eine Energieversorgung des Sensors 4, nämlich dahingehend, dass er von einem inaktiv-Modus in einen Betriebsmodus versetzt wird. Nach der Aktivierung des Sensors 4 kann dieser zur Füllstands- oder Grenzstandmessung eingesetzt werden. Die Betätigungseinheit 8a, 8b wird durch die Verbindung der Füll- oder Entleerungseinrichtung 7 mit dem Behälter 3 aktiviert, sodass in Folge der Verbindung der Füll- oder Entleerungseinrichtung 7 mit dem Behälter 3 eine Aktivierungskette bis hin zur Aktivierung des Sensors 4 ausgelöst wird.

Die Figur 2 zeigt ferner, dass dem Behälter 3a und/oder der Füll- oder Entleerungseinrichtung 7 eine Steuereinheit 9a, 9b zugeordnet ist. Über diese Steuereinheit(en) 9a, 9b wird die Zufuhr von Füllgut 2 in den Behälter 3 bzw. die Abfuhr von Füllgut 2 aus dem Behälter 3 gesteuert, insbesondere durch Freigeben eines Ventils 14. Die Messvorrichtung 1 ist dazu mit der dem Behälter 3 und/oder der Füll- oder Entleerungseinrichtung 7 zugeordneten Steuereinheit 9a, 9b signaltechnisch verbunden.

Nachfolgend sei ein Beispiel für ein mögliches Zusammenwirken der Messvorrichtung 1 und der Steuereinheit 9a, 9b beschrieben. So wird in Folge der Aktivierung des Sensors 4 (also nach dem Verbinden des Behälters 3 mit der Füll- oder Entleerungseinrichtung 7) vorzugsweise ein Funktionsfähigkeits-Test des Sensors 4 ausgeführt, bei dem eine Funktionsfähigkeits-Bewertung zur Feststellung einer positiven oder negativen Funktionsfähigkeit des Sensors 4 vorgenommen wird. Im Falle einer festgestellten positiven Funktionsfähigkeit wird sodann ein Füll-oder Entleerungs-Freigabesignal an die dem Behälter 3 und/oder der Füll- oder Entleerungseinrichtung 7 zugeordnete Steuereinheit 9a, 9b weitergeleitet, in Folge dessen die Befüllung oder Entleerung des Behälters 3 mit Füllgut 2 initiiert wird, insbesondere durch Öffnen des Ventils 14 oder einer dem Behälter 3 zugeordneten Absperrvorrichtung (nicht dargestellt).

Im Falle einer seitens der Messvorrichtung 1 vorgenommenen Feststellung, dass ein vorgegebener Füll- oder Grenzstand in dem Behälter 3 erreicht ist, wird ein Füll- oder Entleerungsvorgangs-Beendigungssignal in Richtung der dem Behälter 3 und/oder der Füll- oder Entleerungseinrichtung 7 zugeordneten Steuereinheit 9a, 9b weitergeleitet. Da die Steuereinheit 9a, 9b mit dem Ventil 14 bzw. der Füll- oder Entleerungseinrichtung 7 signaltechnisch verbunden ist, kann über die Steuereinheit 9a, 9b ein Füllvorgang oder Entleerungsvorgang beendet werden, insbesondere das Ventil 14 geschlossen werden. Gleiches gilt für eine an dem Behälter angeordnete Absperrvorrichtung (nicht dargestellt).

Auch während der Befüllung oder während des Entleerens kann ein Datenaustausch zwischen der Messvorrichtung 1, insbesondere einer dort vorgesehenen Kommunikationseinheit und der dem Behälter 3 und/oder der Füll- oder Entleerungseinrichtung 7 zugeordneten Steuereinheit 9a, 9b, erfolgen.

### Bezugszeichenliste

- 1: Messvorrichtung
- 2: Füllgut
- 3: Behälter
- 4: Sensor
- 5: Energieversorgungseinheit
- 6: Aktivierungseinheit
- 7: Füll- oder Entleerungseinrichtung
- 8a: Betätigungsmittel
- 8b: Betätigungsmittel
- 9a: Steuereinheit
- 9b: Steuereinheit
- 10: Innenraum
- 11: Leitung
- 12: Stutzen
- 13: Einfüllöffnung bzw. Auslassöffnung
- 14: Ventil

## Patentansprüche

1. Messvorrichtung (1) zur Erfassung eines Füll- oder Grenzstands eines Füllguts (2) in einem Behälter (3), wobei die Messvorrichtung (1) dazu ausgebildet ist, an dem Behälter (3) angeordnet zu werden, umfassend einen Sensor (4) zur Bestimmung des Füll- oder Grenzstands, eine Energieversorgungseinheit (5), die mit dem Sensor (4) elektrisch verbunden und zur Versorgung des Sensors (4) mit elektrischer Energie ausgebildet und eingerichtet ist, sowie eine Aktivierungseinheit (6), die signaltechnisch zumindest mit der Energieversorgungseinheit (5) verbunden ist, **dadurch gekennzeichnet, dass** die Aktivierungseinheit (6) dazu ausgebildet und eingerichtet ist, beim Verbinden des Behälters (3) mit einer Füll- oder Entleerungseinrichtung (7) durch ein an dem Behälter (3) und/oder der Füll- oder Entleerungseinrichtung (7) vorgesehenes Betätigungsmittel (8a, 8b) betätigt zu werden und infolgedessen den Sensor (4) zu aktivieren und von einem inaktiv-Modus in einen Betriebsmodus zu versetzen, wobei die Messvorrichtung dazu ausgebildet und eingerichtet ist, während eines Befüllens oder Entleerens des Behälters mit dem Füllgut kontinuierlich oder diskontinuierlich den Füll- oder Grenzstand unter Einsatz des Sensors (4) zu bestimmen und den Sensor (4) nach Beendigung des Füll- oder Entleerungsvorgangs von einem Betriebsmodus in einen inaktiv-Modus zu versetzen.

2. Messvorrichtung (1) nach Anspruch 1, **dadurch gekennzeichnet, dass** die Aktivierungseinheit (6) dazu eingerichtet ist, den Sensor (4) im Wege einer Aktivierung der Energieversorgung zwischen der Energieversorgungseinheit (5) und dem Sensor (4) von einem inaktiv-Modus in einen Betriebsmodus zu versetzen.

3. Messvorrichtung (1) nach Anspruch 1, **dadurch gekennzeichnet, dass** die Energieversorgungseinheit zumindest eine Batterie oder einen Akku umfasst.

4. Messvorrichtung (1) nach Anspruch 1, **dadurch gekennzeichnet, dass** die Aktivierungseinheit (6) mechanisch, elektrisch, optisch, optoelektronisch, magnetisch oder elektromagnetisch betätigbar ist.

5. Messvorrichtung (1) nach einem der vorangehenden Ansprüche, **dadurch gekennzeichnet, dass** die Messvorrichtung (1) dazu ausgebildet und eingerichtet ist, in Folge der Aktivierung des Sensors (4) einen Funktionsfähigkeits-Test auszuführen, bei dem eine Funktionsfähigkeits-Bewertung zur Feststellung einer positiven oder negativen Funktionsfähigkeit des Sensors (4) vorgenommen wird, und im Falle einer positiven Funktionsfähigkeit ein Füll- oder Entleerungs-Freigabesignal an eine dem Behälter (3) und/oder der Füll- oder Entleerungseinrichtung (7) zugeordneten Steuereinheit (9a, 9b) weiterzuleiten.

6. Messvorrichtung (1) nach einem der vorangehenden Ansprüche, **dadurch gekennzeichnet, dass** die Messvorrichtung (1) dazu ausgebildet und eingerichtet ist, in Folge der Bestimmung des Füll- oder Grenzstands und einer dahingehenden Feststellung, dass ein vorgegebener Füll- oder Grenzstand erreicht ist, ein Füll- oder Entleerungsvorgangs-Beendigungssignal in Richtung der dem Behälter (3) und/oder der Füll- oder Entleerungseinrichtung (7) zugeordneten Steuereinheit (9a, 9b) weiterzuleiten.

7. Messvorrichtung (1) nach einem der vorangehenden Ansprüche, **dadurch gekennzeichnet, dass** der Sensor (4) ein Vibrationssensor, ein kapazitiver Sensor, ein Impedanzsensor, ein Radarsensor, ein optischer Sensor oder ein TDR-Sensor ist.

8. Messvorrichtung (1) nach einem der vorangehenden Ansprüche, **gekennzeichnet durch** eine Kommunikationseinheit, die dazu ausgebildet und eingerichtet ist, kabellos oder kabelgebunden Signale zu empfangen und auszusenden, beispielsweise von bzw. an die dem Behälter (3) und/oder der Füll- oder Entleerungseinrichtung (7) zugeordneten Steuereinheit (9a, 9b).

9. Messvorrichtung (1) nach einem der vorangehenden Ansprüche, **dadurch gekennzeichnet, dass** die Messvorrichtung (1) dazu ausgebildet und eingerichtet ist, vor oder während des Befüllens oder Entleeren des Behälters (3), zwischen der Messvorrichtung (1) und der dem Behälter (3) und/oder der Füll- oder Entleerungseinrichtung (7) zugeordneten Steuereinheit (9a, 9b) einen Signalaustausch, beispielsweise einen Daten-Handshake, auszuführen.

10. Messvorrichtung (1) nach einem der vorangehenden Ansprüche, **gekennzeichnet durch** eine Energieerzeugungseinheit, insbesondere eine Solareinheit, die mit der Energieversorgungseinheit (5) elektrisch verbunden ist und dazu ausgebildet und eingerichtet ist, die Energieversorgungseinheit (5) aufzuladen.

11. Verfahren zum Befüllen oder Entleeren mit bzw. von einem Füllgut (2) eines Behälters (3) mit einem Füllgut (2), unter Einsatz einer Füll- oder Entleerungseinrichtung (7) und einer nach einem oder mehreren der Ansprüche 1 bis 11 ausgebildeten und an dem Behälter (3) angeordneten Messvorrichtung (1), wobei die Messvorrichtung (1) umfasst: einen Sensor (4) zur Bestimmung des Füll- oder Grenzstands, eine Energieversorgungseinheit (5), die mit dem Sensor (4) elektrisch verbunden ist, sowie eine Aktivierungseinheit (6), die signaltechnisch zumindest mit der Energieversorgungseinheit (5) verbunden ist, umfassend die folgenden Schritte:
a) Verbinden der Füll- oder Entleerungseinrichtung (7) mit dem Behälter (3);
b) Betätigen der Aktivierungseinheit (6) durch ein an dem Behälter (3) und/oder der Füll- oder Entleerungseinrichtung (7) vorgesehenes Betätigungsmittel (8a, 8b), wobei die Betätigung während oder nachfolgend zum Schritt a) erfolgt;
c) in Folge des Verfahrensschritts b): Aktivieren des Sensors (4) und Versetzen desselbigen von einem inaktiv-Modus in einen Betriebsmodus;
d) Befüllen oder Entleeren des Behälters (3) mit dem Füllgut (2), wobei während des Befüllens oder Entleerens kontinuierlich oder diskontinuierlich der Füll- oder Grenzstand unter Einsatz des Sensors (4) bestimmt wird,
e) bei Erreichen eines vorgegebenen Füll- oder Grenzstandes: Beenden des Füllvorgangs;
f) nach Beendigung des Füllvorgangs oder Entleerungsvorgangs: Versetzen des Sensors (4) von einem Betriebsmodus in einen inaktiv-Modus.

12. Verfahren nach Anspruch 11, **dadurch gekennzeichnet, dass** in Folge der Aktivierung des Sensors (4), ein Funktionsfähigkeits-Test ausgeführt wird, bei dem eine Funktionsfähigkeits-Bewertung des Sensors (4) vorgenommen wird, und im Falle einer Positiventscheidung ein Füll- oder Entleerungs-Freigabesignal an eine dem Behälter (3) und/oder der Füll- oder Entleerungseinrichtung (7) zugeordneten Steuereinheit (9a, 9b) weiterzuleiten.

13. Verfahren nach Anspruch 11 oder 12, **dadurch gekennzeichnet, dass** die Messvorrichtung (1) in Folge einer jeweiligen Bestimmung des Füll- oder Grenzstands einen Abgleich des bestimmten Füll- oder Grenzstands mit einem vorgegebenen Füll- oder Grenzstand vornimmt, und dass die Messvorrichtung (1) im Falle des Erreichens des vorgegebenen Füll- oder Grenzstands ein Füll- oder Entleerungsvorgangs-Beendigungssignal in Richtung der dem Behälter (3) und/oder der Füll- oder Entleerungseinrichtung (7) zugeordneten Steuereinheit (9a, 9b) weiterleitet, beispielsweise über die Kommunikationseinheit.

14. Verfahren nach einem der Ansprüche 11 bis 13, **dadurch gekennzeichnet, dass** vor oder während des Befüllens oder Entleeren des Behälters (3) mit bzw. von dem Füllgut (2), zwischen der Messvorrichtung (1) und der dem Behälter (3) und/oder der Füll- oder Entleerungseinrichtung (7) zugeordneten Steuereinheit (9a, 9b) ein Signalaustausch, beispielsweise ein Daten-Handshake, ausgeführt wird.

## Claims

1. A measuring device (1) for determining a fill level or limit level of a filling medium (2) in a container (3), wherein the measuring device (1) is designed to be arranged on the container (3) and comprises a sensor (4) for determining said fill level or limit level, a power supply unit (5) which is electrically connected to the sensor (4) and is designed and configured for supplying the sensor (4) with electric energy, and an activation unit (6) which is connected at least to the power supply unit (5) for signal transmission, **characterised in that**, when the container (3) is connected to a filling or emptying device (7), the activation unit (6) is designed and configured to be actuated by an actuating means (8a, 8b) provided on the container (3) and/or on the filling or emptying device (7) and, accordingly, to activate the sensor (4) by putting it from an inactive mode into an operating mode, wherein the measuring device is designed and configured for continuously or discontinuously determining the fill level or limit level with the aid of the sensor (4) while the container is being filled or emptied by adding or removing the filling medium, and to put the sensor (4) from an operating mode into an inactive mode once the filling or emptying operation has been accomplished.

2. The measuring device (1) as claimed in claim 1, **characterised in that** the activation unit (6) is configured to put the sensor (4) from an inactive mode into an operating mode by way of activating the power supply between the power supply unit (5) and the sensor (4).

3. The measuring device (1) as claimed in claim 1, **characterised in that** the power supply unit comprises at least one battery or at least one accumulator.

4. The measuring device (1) as claimed in claim 1, **characterised in that** the activation unit (6) may be actuated using mechanical, electrical, optical, optoelectronic, magnetic or electromagnetic means.

5. The measuring device (1) as claimed in any of the preceding claims, **characterised in that** the measuring device (1) is designed and configured, subsequent to the activation of the sensor (4), to perform an operability test in the course of which an operability evaluation is carried out for determining a positive or negative operability of the sensor (4) and, in case of a positive operability, to forward a filling or emptying enable signal to a control unit (9a, 9b) assigned to the container (3) and/or to the filling or emptying device (7).

6. The measuring device (1) as claimed in any of the preceding claims, **characterised in that**, subsequent to the determination of the fill level or limit level and to a detection to the effect that a predefined fill level or limit level has been reached, the measuring device (1) is designed and configured to forward a filling or emptying disable signal towards the control unit (9a, 9b) assigned to the container (3) and/or to the filling or emptying device (7).

7. The measuring device (1) as claimed in any of the preceding claims, **characterised in that** the sensor (4) is a vibration sensor, a capacitive sensor, an impedance sensor, a radar sensor, an optical sensor, or a TDR sensor.

8. The measuring device (1) as claimed in any of the preceding claims, **characterised by** a communication unit which is designed and configured to receive and transmit signals in a wired or wireless manner, for example signals arriving from, or routed to, the control unit (9a, 9b) assigned to the container (3) and/or to the filling or emptying device (7).

9. The measuring device (1) as claimed in any of the preceding claims, **characterised in that** the measuring device (1) is designed and configured, prior to, or during the filling or emptying of the container (3), to carry out a signal exchange, for example a data handshake, between the measuring device (1) and the control unit (9a, 9b) assigned to the container (3) and/or to the filling or emptying device (7).

10. The measuring device (1) as claimed in any of the preceding claims, **characterised by** a power generation unit, in particular a solar unit, which is electrically connected to the power supply unit (5) and is designed and configured for recharging the power supply unit (5).

11. A method of filling or emptying a container (3) by adding a filling medium (2) or removing a filling medium (2) with the aid of a filling or emptying device (7) and a measuring device (1) which is designed as claimed in one or several of claims 1 to 11 and is arranged on the container (3), wherein the measuring device (1) comprises: a sensor (4) for determining the fill level or limit level, a power supply unit (5) which is electrically connected to the sensor (4), and an activation unit (6) which is connected at least to the power supply unit (5) for signal transmission, the method comprising the following steps:
a) connecting the filling or emptying device (7) to the container (3);
b) actuating the activation unit (6) via an actuating means (8a, 8b) provided on the container (3) and/or on the filling or emptying device (7), wherein the actuation is carried out during or after step a);
c) subsequent to process step b): activating the sensor (4) and putting it from an inactive mode into an operating mode;
d) filling or emptying the container (3) by adding or removing the filling medium (2), wherein during the filling or emptying process, the sensor (4) is used to continuously or discontinuously determine the fill level or limit level,
e) stopping the filling operation, once a predefined fill level or limit level has been reached;
f) putting the sensor (4) from an operating mode into an inactive mode, once the filling or emptying operation has been accomplished.

12. The method as claimed in claim 11, **characterised in that**, subsequent to the activation of the sensor (4), an operability test is performed in the course of which an operability evaluation of the sensor (4) is carried out and, in case of a positive decision, a filling or emptying enable signal is forwarded to a control unit (9a, 9b) assigned to the container (3) and/or to the filling or emptying device (7).

13. The method as claimed in claim 11 or 12, **characterised in that**, subsequent to any given determination of the fill level or limit level, the measuring device (1) compares the respectively determined fill level or limit level with a predefined fill level or limit level, and, in case the predefined fill level or limit level has been reached, the measuring device (1) forwards, for example via the communication unit, a filling or emptying disable signal towards the control unit (9a, 9b) assigned to the container (3) and/or to the filling or emptying device (7).

14. The method as claimed in any one of claims 11 to 13, **characterised in that**, prior to, or during the filling or emptying of the container (3) by adding or removing the filling medium (2), a signal exchange, for example a data handshake, is carried out between the measuring device (1) and the control unit (9a, 9b) assigned to the container (3) and/or to the filling or emptying device (7).

## Revendications

1. Dispositif de mesure (1) destiné à détecter un niveau de remplissage ou niveau limite d'un matériau de remplissage (2) dans un récipient (3), dans lequel le dispositif de mesure (1) est conçu pour être disposé sur le récipient (3), comprenant un capteur ( 4) pour déterminer le niveau de remplissage ou le niveau limite, une unité d'alimentation en énergie (5) qui est connectée électriquement au capteur (4) et est conçue et agencée pour alimenter le capteur (4) en énergie électrique, ainsi qu'une unité d'activation (6) qui est connectée en technique de signal au moins à l'unité d'alimentation en énergie (5), **caractérisé par le fait que** l'unité d'activation (6) est conçue et agencée pour, lorsque le récipient (3) est relié à un dispositif de remplissage ou de vidange ( 7), être actionnée par un moyen d'actionnement (8a, 8b) qui est prévu sur le récipient (3) et/ou sur le dispositif de remplissage ou de vidange (7), et pour activer par conséquent le capteur (4) et le faire passer d'un mode inactif à un mode de fonctionnement, dans leqel ledit dispositif de mesure est conçu et agencé pour déterminer de manière continue ou discontinue, en utilisant le capteur (4), le niveau de remplissage ou le niveau limite pendant que le récipient est rempli du matériau de remplissage ou en vidé, et pour faire passer le capteur (4) d'un mode de fonctionnement à un mode inactif après que l'opération de remplissage ou de vidange a été achevé.

2. Dispositif de mesure (1) selon la revendication 1, **caractérisé par le fait que** l'unité d'activation (6) est conçue pour faire passer le capteur (4) d'un mode inactif à un mode de fonctionnement au cours d'une activation de l'alimentation en énergie entre l'unité d'alimentation en énergie (5) et le capteur (4).

3. Dispositif de mesure (1) selon la revendication 1, **caractérisé par le fait que** l'unité d'alimentation en énergie comprend au moins une batterie ou une batterie rechargeable.

4. Dispositif de mesure (1) selon la revendication 1, **caractérisé par le fait que** l'unité d'activation (6) peut être actionnée de façon mécanique, électrique, optique, optoélectronique, magnétique ou électromagnétique.

5. Dispositif de mesure (1) selon l'une quelconque des revendications précédentes, **caractérisé par le fait que** le dispositif de mesure (1) est conçu et agencé pour effectuer un test de fonctionnalité suite à l'activation du capteur (4), dans lequel une évaluation de fonctionnalité est effectuée pour déterminer une fonctionnalité positive ou négative du capteur (4) et, en cas de fonctionnalité positive, pour transmettre un signal de libération de remplissage ou de vidange à une unité de commande (9a, 9b) associée au récipient (3) et/ou au dispositif de remplissage ou de vidange (7).

6. Dispositif de mesure (1) selon l'une quelconque des revendications précédentes, **caractérisé par le fait que** le dispositif de mesure (1) est conçu et agencé pour, suite à la détermination du niveau de remplissage ou du niveau limite et d'une détermination qu'un niveau de remplissage ou niveau limite prédéterminé est atteint, transmettre un signal de fin d'opération de remplissage ou de vidange en direction de l'unité de commande (9a, 9b) associée au récipient (3) et/ou au dispositif de remplissage ou de vidange (7).

7. Dispositif de mesure (1) selon l'une quelconque des revendications précédentes, **caractérisé par le fait que** le capteur (4) est un capteur de vibration, un capteur capacitif, un capteur d'impédance, un capteur radar, un capteur optique ou un capteur TDR.

8. Dispositif de mesure (1) selon l'une quelconque des revendications précédentes, **caractérisé par** une unité de communication qui est conçue et agencée pour recevoir et envoyer des signaux sans fil ou par fil, par exemple depuis ou bien à l'unité de commande (9a, 9b) associée au récipient (3) et/ou au dispositif de remplissage ou de vidange (7).

9. Dispositif de mesure (1) selon l'une quelconque des revendications précédentes, **caractérisé par le fait que** le dispositif de mesure (1) est conçu et agencé pour effectuer un échange de signaux, par exemple un handshake de données, avant ou pendant le remplissage ou la vidange du récipient (3), entre le dispositif de mesure (1) et l'unité de commande (9a, 9b) associée au récipient (3) et/ou au dispositif de remplissage ou de vidange (7).

10. Dispositif de mesure (1) selon l'une quelconque des revendications précédentes, **caractérisé par** une unité de production d'énergie, en particulier une unité solaire qui est connectée électriquement à l'unité d'alimentation en énergie (5) et est conçue et agencée pour charger l'unité d'alimentation en énergie (5).

11. Procédé pour remplir un récipient (3) d'un matériau de remplissage (2) ou pour vider le récipient (3) du matériau de remplissage (2), en utilisant un dispositif de remplissage ou de vidange (7) et un dispositif de mesure (1) qui est conçu selon une ou plusieurs des revendications 1 à 11 et est disposé sur ledit récipient (3), dans lequel le dispositif de mesure (1) comprend: un capteur (4) pour déterminer le niveau de remplissage ou niveau limite, une unité d'alimentation en énergie (5) qui est connectée électriquement au capteur (4), et une unité d'activation (6) qui est connectée en technique de signal au moins à l'unité d'alimentation en énergie (5), comprenant les étapes suivantes consistant à:
a) relier le dispositif de remplissage ou de vidange (7) au récipient (3);
b) actionner l'unité d'activation (6) par un moyen d'actionnement (8a, 8b) qui est prévu sur le récipient (3) et/ou sur le dispositif de remplissage ou de vidange (7), dans lequel l'actionnement a lieu pendant ou après l'étape a);
c) à la suite de l'étape b) du procédé: activer le capteur (4) et faire passer ce dernier d'un mode inactif à un mode de fonctionnement;
d) remplir ou vider le récipient (3) du matériau de remplissage (2), dans lequel le niveau de remplissage ou niveau limite est déterminé de manière continue ou discontinue lors du remplissage ou de la vidange, en utilisant le capteur (4),
e) lorsqu'un niveau de remplissage ou un niveau limite prédéterminé est atteint: mettre fin à l'opération de remplissage;
f) après avoir achevé l'opération de remplissage ou de vidange: faire passer le capteur (4) d'un mode de fonctionnement à un mode inactif.

12. Procédé selon la revendication 11, **caractérisé par le fait qu'**à la suite de l'activation du capteur (4), un test de fonctionnalité est effectué, dans lequel une évaluation de fonctionnalité du capteur (4) est effectuée, et en cas de décision positive, un signal de libération de remplissage ou de vidange est transmis à une unité de commande (9a, 9b) associée au récipient (3) et/ou au dispositif de remplissage ou de vidange (7).

13. Procédé selon la revendication 11 ou 12, **caractérisé par le fait que**, à la suite d'une détermination respective du niveau de remplissage ou niveau limite, le dispositif de mesure (1) effectue une comparaison du niveau de remplissage ou niveau limite déterminé avec un niveau de remplissage ou limite prédéterminé, et que le dispositif de mesure (1), si le niveau de remplissage ou niveau limite prédéterminé est atteint, transmet un signal de fin d'opération de remplissage ou de vidange en direction de l'unité de commande (9a, 9b) associée au récipient (3) et/ou au dispositif de remplissage ou de vidange (7), par exemple via l'unité de communication.

14. Procédé selon l'une quelconque des revendications 11 à 13, **caractérisé par le fait qu'**avant ou pendant le remplissage ou la vidange du récipient (3) du matériau de remplissage (2), un échange de signaux, par exemple un handshake de données, est effectué entre le dispositif de mesure (1) et l'unité de commande (9a, 9b) associée au récipient (3) et/ou au dispositif de remplissage ou de vidange (7).
